# EUROPÄISCHE PATENTSCHRIFT

(11) **EP 2 575 999 B1**
(45) Veröffentlichungstag und Bekanntmachung des Hinweises auf die Patenterteilung: **28.11.2018**
(21) Anmeldenummer: 11720456.0
(22) Anmeldetag: 17.05.2011
(51) Int. Cl.: B01D 35/147, B01D 35/153, B01D 35/18

(54) **FILTER- UND KÜHLVORRICHTUNG**
FILTER AND COOLING APPARATUS
DISPOSITIF DE FILTRAGE ET DE REFROIDISSEMENT

(30) Priorität: 29.05.2010 DE 102010021990
(43) Veröffentlichungstag der Anmeldung: 10.04.2013
(73) Patentinhaber: Mahle International GmbH, 70376 Stuttgart (DE)
(72) Erfinder: DUNSCH, Robert, 71665 Vaihingen (DE)
(74) Vertreter: BRP Renaud & Partner mbB Rechtsanwälte Patentanwälte Steuerberater
(86) Internationale Anmeldenummer: PCT/EP2011/057976
(87) Internationale Veröffentlichungsnummer: WO 2011/151174

(56) Entgegenhaltungen:
- EP-A1- 1 629 878
- WO-A1-2009/094437
- DE-B- 1 034 923
- DE-U1-202008 014 212
- US-A- 3 374 890

## Beschreibung

Die vorliegende Erfindung betrifft eine Vorrichtung zum Filtern und Kühlen einer Flüssigkeit, insbesondere eines Flüssigkeitskreises, wie zum Beispiel eines Schmierölkreises einer Brennkraftmaschine, mit den Merkmalen des Oberbegriffs des Anspruchs 1.

Eine derartige Vorrichtung zum Filtern und Kühlen, die auch als Filter- und Kühlvorrichtung bezeichnet werden kann, umfasst üblicherweise eine Filtereinrichtung, die in einem Filtergehäuse zumindest ein Filterelement aufweist, das im Filtergehäuse eine Rohseite von einer Reinseite trennt, sowie eine Kühleinrichtung, die einen Wärmeübertrager mit einer Anschlussseite aufweist, die einen Kühlereinlass und einen Kühlerauslass aufweist.

Bei niedrigen Temperaturen kann die zu filternde Flüssigkeit, bei der es sich vorzugsweise um ein Öl handeln kann, eine vergleichsweise hohe Viskosität aufweisen, was den Durchströmungswiderstand am Filterelement signifikant erhöht. Außerdem kann das Filterelement allmählich zusetzen. Um bei diesem Zustand eine Beschädigung des Filterelements zu vermeiden, kann ein Filterbypassventil vorgesehen sein, das ab einem vorbestimmten Differenzdruck zwischen Rohseite und Reinseite öffnet und die Rohseite unter Umgehung des Filterelements mit der Reinseite fluidisch verbindet.

Die Umgehung des Filterelements kann zum Schutz des Filterelements erforderlich sein, da ein unzulässig hoher Differenzdruck zwischen Rohseite und Reinseite zu einer Zerstörung des Filterelements führen kann. Der Differenzdruck zwischen Rohseite und Reinseite kann dadurch ansteigen, dass sich das Filterelement während des Filtrierbetriebs allmählich mit den herausgefilterten Verunreinigungen zusetzt, was den Durchströmungswiderstand des Filterelements allmählich erhöht. Zusätzlich kann auch die zu filternde Flüssigkeit, insbesondere wenn es sich dabei um ein Öl handelt, eine von der Temperatur abhängige Viskosität besitzen. Insbesondere kann bei niedriger Temperatur eine erhöhte Viskosität auftreten, die ebenfalls einen erhöhten Durchströmungswiderstand am Filterelement zur Folge hat. Niedrige Schmieröltemperaturen liegen bei einer Brennkraftmaschine üblicherweise während einer Kaltstartphase vor. Während dieser zeitlich in der Regel kurzen Kaltstartphase kann eine Schmierung mit ungefiltertem Schmieröl in Kauf genommen werden.

Ein derartiges Filterbypassventil kann beispielsweise einen verstellbaren Ventilkörper aufweisen, der zum Steuern einer die Rohseite fluidisch mit der Reinseite verbindenden Filterbypassöffnung mit einem Ventilsitz zusammenwirkt. Darüber hinaus kann das Filterbypassventil grundsätzlich mit einer Schließdruckfeder ausgestattet sein, die den Ventilkörper in eine die Filterbypassöffnung verschließende Schließstellung antreibt und die an einem Ventilkäfig abgestützt sein kann.

Aus der WO 2009/094437 A1 ist eine Vorrichtung zum Filtern und Kühlen von Schmieröl eines Schmierölkreis einer Brennkraftmaschine bekannt, umfassend eine Filtereinrichtung, die in einem Filtergehäuse zumindest ein Filterelement aufweist, das im Filtergehäuse eine Rohseite von einer Reinseite trennt, eine Kühleinrichtung, die einen Wärmeübertrager mit einer Anschlussseite aufweist, die einen Kühlereinlass und einen Kühlerauslass aufweist, und ein Filterbypassventil, das ab einem vorbestimmten Differenzdruck zwischen Rohseite und Reinseite öffnet und die Rohseite unter Umgehung des Filterelements mit der Reinseite fluidisch verbindet, wobei das Filterbypassventil einen verstellbaren Ventilkörper aufweist, der zum Steuern einer die Rohseite fluidisch mit der Reinseite verbindenden Filterbypassöffnung mit einem Ventilsitz zusammenwirkt, wobei das Filterbypassventil eine Schließdruckfeder aufweist, die den Ventilkörper in eine die Filterbypassöffnung verschließende Schließstellung antreibt und die an einem Ventilkäfig abgestützt ist. Bei der bekannten Vorrichtung ist das Filterbypassventil mit dem Ventilkörper, dem Ventilsitz, der Schließdruckfeder und dem Ventilkäfig an einem Einsatz ausgebildet, der in einen Deckel zum Verschließen des Filtergehäuses eingesetzt ist. Dabei sind der Ventilkäfig und der Ventilsitz integral an diesem Einsatz ausgebildet.

Aus der EP 1 629 878 A1 ist eine weitere Vorrichtung zum Filtern und Kühlen von Schmieröl einer Brennkraftmaschine bekannt.

Die vorliegende Erfindung beschäftigt sich mit dem Problem, für eine Filter- und Kühlvorrichtung der eingangs genannten Art eine verbesserte Ausführungsform anzugeben, die sich insbesondere durch einen preiswerten Aufbau sowie durch eine einfache Montage auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Ventilsitz integral an der Anschlussseite des Wärmeübertragers auszuformen. Durch diese integrierte Bauweise entfällt ein separat auszubildender Ventilsitz. Gleichzeitig wird die Funktionalität des Wärmeübertragers vergrößert, indem der Ventilsitz unmittelbar an der Anschlussseite des Wärmeübertragers ausgeformt wird.

Alternativ dazu beruht die vorliegende Erfindung auch auf dem allgemeinen Gedanken, den Ventilkäfig integral am Filtergehäuse auszuformen. Auch diese Integralbauweise führt zu einer Vereinfachung der Herstellbarkeit, da ein separat herzustellender und zu montierender Ventilkäfig entfallen kann. Der Ventilkäfig ist unmittelbar am Ventilgehäuse ausgeformt. Insgesamt ergibt sich dadurch auch eine Vereinfachung der Montage.

Besonders vorteilhaft ist es nun, die beiden erfindungsgemäßen und grundsätzlich voneinander unabhängigen Lösungen miteinander zu kombinieren, so dass einerseits der Ventilsitz integral an der Anschlussseite des Wärmeübertragers ausgeformt ist, während andererseits der Ventilkäfig integral am Filtergehäuse ausgeformt ist. Auf diese Weise sind beide stationären Bestandteile des Filterbypassventils, nämlich der Ventilsitz und der Ventilkäfig integral an einem anderen Bestandteil der Filter- und Kühlvorrichtung ausgeformt, und zwar an verschiedenen Bestandteilen, die ohnehin aneinander montiert werden müssen, so dass durch die Montage des Wärmeübertragers am Filtergehäuse auch das Filterbypassventil komplettiert wird, indem der Ventilkäfig in der gewünschten Position am Ventilsitz positioniert wird. Im Rahmen dieser Montage müssen nur noch die beweglichen Bestandteile des Filterbypassventils, nämlich der Ventilkörper und die Schließdruckfeder, in den Ventilkäfig eingesetzt werden, der dann durch die Montage des Wärmeübertragers am Filtergehäuse durch den Ventilsitz verschlossen wird.

Entsprechend einer vorteilhaften Ausführungsform kann das Filtergehäuse einen rohseitigen Vorrichtungszulauf, einen reinseitigen Vorrichtungsablauf, einen Filterauslass und einen Filtereinlass aufweisen. Die Montage des Wärmeübertragers mit seiner Anschlussplatte am Filtergehäuse erfolgt dann so, dass der Vorrichtungszulauf mit dem Kühlereinlass fluidisch verbunden ist und dass der Kühlerauslass
mit dem Filtereinlass fluidisch verbunden ist. Mit anderen Worten, die Filter- und Kühlvorrichtung besitzt für die Filtereinrichtung und die Kühleinrichtung einen gemeinsamen rohseitigen Vorrichtungszulauf und einen gemeinsamen reinseitigen Vorrichtungsablauf, die am Filtergehäuse ausgebildet sind. Ferner ist im Bereich der Anschlussseite des Wärmeübertragers eine Art fluidische Schnittstelle realisiert, über die die Kühleinrichtung in den Fluidpfad der Filtereinrichtung eingebunden ist, derart, dass die zu filternde Flüssigkeit zuerst den Wärmeübertrager durchströmt, bevor sie zum Filterelement gelangt.

Erfindungsgemäß ist im Wärmeübertrager ein Kühlpfad ausgebildet, der den rohseitigen Kühlereinlass mit dem rohseitigen Kühlerauslass fluidisch verbindet. Außerdem verbindet die Filterbypassöffnung den Kühlpfad zwischen Kühlereinlass und Kühlerauslass mit der Reinseite fluidisch. Mit anderen Worten, die Filterbypassöffnung ist zwischen Kühlereinlass und Kühlerauslass am Kühlpfad angeordnet. Hierdurch kann der zur Verfügung stehende Bauraum besser genutzt werden.

Der Wärmeübertrager kann einen Wärmeübertragungskörper und eine Anschlussplatte aufweisen, wobei die Anschlussplatte die Anschlussseite des Wärmeübertragers bildet. Hierdurch ergibt sich eine vereinfachte Montierbarkeit für den Wärmeübertrager am Filtergehäuse. Insbesondere kann auf ein separates Kühlergehäuse verzichtet werden, da der Wärmeübertrager in sich eine nach außen abgeschlossene Einheit bildet.

Zweckmäßig kann der Wärmeübertrager einen Wärmeübertragungskörper aufweisen, der durch einen Stapel von Plattenelementen gebildet ist, die im gestapelten Zustand im Wärmeübertragungskörper einen mit dem Kühlereinlass und dem Kühlerauslass fluidisch verbundenen Wärmeabgabepfad und einen mit einem Kühlerzulauf und einem Kühlerablauf fluidisch verbundenen Wärmeaufnahmepfad ausbilden, wobei die Plattenelemente den Wärmeabgabepfad und den Wärmeaufnahmepfad mediengetrennt sowie wärmeübertragend miteinander koppeln. Mit anderen Worten, der Wärmeübertrager ist als Plattenkühler ausgestaltet und enthält zwei voneinander getrennte Fluidpfade. Hierdurch kann eine besonders intensive Kühlleistung realisiert werden. Beispielsweise kann der Wärmeaufnahmepfad an einen Kühlkreis angeschlossen werden, in dem ein Kühlmittel zirkuliert. Bei einer Fahrzeuganwendung kann der Wärmeaufnahmepfad des Wärmeübertragers beispielsweise an einen Kühlkreis der Brennkraftmaschine angeschlossen sein.

Vorteilhaft kann zwischen dem Filtergehäuse und dem Wärmeübertrager eine Vorlaufdichtung angeordnet sein, die axial wirkt und die den Filterauslass sowie den Kühlereinlass einfasst. Zusätzlich oder alternativ kann zwischen dem Filtergehäuse und dem Wärmeübertrager eine Rücklaufdichtung angeordnet sein, die axial wirkt und die den Kühlerauslass sowie den Filtereinlass einfasst. Zusätzlich oder alternativ kann zwischen dem Filtergehäuse und dem Wärmeübertrager eine Bypassventildichtung angeordnet sein, die axial wirkt und die den Ventilsitz einfasst. Die vorstehend genannten Dichtungen, die bevorzugt kumulativ realisiert werden, vereinfachen die Montage und behindern effektiv eine Leckage.

Entsprechend einer anderen zweckmäßigen Ausführungsform kann im Filtergehäuse ein Kühlerbypassventil angeordnet sein, das ab einem vorbestimmten Differenzdruck zwischen Kühlereinlass und Kühlerauslass einen den Wärmeübertrager umgehenden Kühlerbypass öffnet. Dies kann dann vorteilhaft sein, wenn es sich bei der zu reinigenden bzw. zu kühlenden Flüssigkeit um ein Öl handelt, das bei niedrigen Temperaturen eine hohe Viskosität besitzt. Durch die Umgehung des Wärmeübertragers bzw. des Kühlers kann der Druckverlust an dem in diesem Fall ohnehin nicht benötigten Kühler vermieden werden, so dass mehr Druckdifferenz am Filterelement zur Verfügung steht.

Entsprechend einer anderen vorteilhaften Ausführungsform kann im Filtergehäuse ein Rückschlagsperrventil zwischen dem Vorrichtungszulauf und dem Filterauslass angeordnet sein, das zum Filterauslass öffnet und zum Vorrichtungszulauf sperrt. Hierdurch kann bei ausgeschalteter Fördereinrichtung ein Leerlaufen der Filter- und Kühlvorrichtung durch den Vorrichtungszulauf vermieden werden.

Gemäß einer anderen Ausführungsform kann das Filterelement im Filtergehäuse bei ordnungsgemäßer Montage der Filter- und Kühlvorrichtung stehend angeordnet sein. In diesem Fall ist dann das Filterbypassventil zweckmäßig oberhalb des Filterelements angeordnet. Diese Bauweise berücksichtigt, dass sich rohseitig ansammelnde Verunreinigungen, die sich nicht am Filterelement ablagern, schwerkraftbedingt im Filtergehäuse nach unten absinken. Somit kann eine durch die gewählte obenliegende Anordnung des Filterbypassventils die Gefahr einer Verunreinigung bzw. Beschädigung oder Funktionsbeeinträchtigung des Filterbypassventils reduziert werden.

Bei stehend angeordnetem Filterelement kann es ferner zweckmäßig sein, den Wärmeübertrager an der Oberseite des Filtergehäuses anzubauen. In diesem Fall ist die Anschlussseite des Wärmeübertragers durch dessen Unterseite gebildet.

Bei einer anderen Ausführungsform kann das Ventilglied topfförmig ausgestaltet sein, wobei ein geschlossener Bodenabschnitt des Ventilglieds außen mit dem Ventilsitz zusammenwirkt und innen an der Schließdruckfeder abgestützt ist. Dabei ragt die Schließdruckfeder durch die offene Seite des Ventilglieds in das Ventilglied hinein. Bei dieser Bauweise beinhaltet das Ventilglied gleichzeitig eine Führung der Schließdruckfeder, was die Montage erleichtert.

Bei einer weiteren Ausführungsform kann das Filtergehäuse an einer vom Wärmeübertrager abgewandten Seite einen Deckel zum Verschließen einer Montageöffnung aufweisen, durch welche das Filterelement in das Filtergehäuse einsetzbar ist. Somit lässt sich das Filterelement, zum Beispiel im Rahmen von Wartungsmaßnahmen, austauschen, ohne dass der Wärmeübertrager vom Filtergehäuse entfernt werden muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Längsschnitt durch eine Filter- und Kühlvorrichtung,
- Fig. 2: ein vergrößertes Detail der Filter- und Kühlvorrichtung im Bereich eines Filterbypassventils im Längsschnitt.

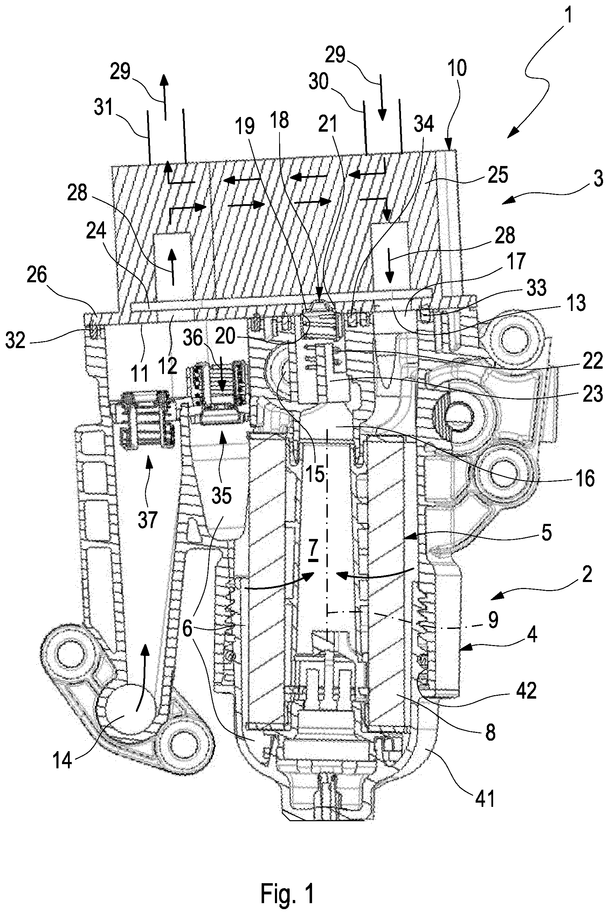

Entsprechend Fig. 1 umfasst eine Vorrichtung 1 zum Filtern und Kühlen einer Flüssigkeit, die im Folgenden auch als Filter- und Kühlvorrichtung 1 oder kurz als Vorrichtung 1 bezeichnet werden kann, eine Filtereinrichtung 2 und eine Kühleinrichtung 3. Die Vorrichtung 1 kann zum Beispiel in einen Flüssigkeitskreis eingebunden sein, wie zum Beispiel ein Schmierölkreis einer Brennkraftmaschine. Sie dient dann zum Filtern und Kühlen des Schmieröls der Brennkraftmaschine.

Die Filtereinrichtung 2 umfasst ein Filtergehäuse 4 sowie zumindest ein Filterelement 5, das im Filtergehäuse 4 angeordnet ist und im Filtergehäuse 4 eine Rohseite 6 von einer Reinseite 7 trennt. Das Filterelement 5 ist im Beispiel ringförmig der zylindrisch ausgestaltet und besitzt einen ringförmigen Filterkörper 8 aus einem geeigneten Filtermaterial. Die Rohseite 6 ist im Beispiel bezüglich einer Längsmittelachse 9 des Filterkörpers 8 bzw. des Filterelements 5 radial außen angeordnet, während die Reinseite 7 radial innen angeordnet ist. Somit ist das Filterelement 5 im Beispiel radial von außen nach innen durchströmt.

Die Kühleinrichtung 3 weist einen Wärmeübertrager 10 auf, der eine Anschlussseite 11 besitzt. An dieser Anschlussseite 11 befinden sich ein Kühlereinlass 12 und ein Kühlerauslass 13. Im gezeigten montierten Zustand ist der Wärmeübertrager 10 mit seiner Anschlussseite 11 an das Filtergehäuse 4 angebaut.

Das Filtergehäuse 4 weist einen rohseitigen Vorrichtungszulauf 14, durch den die ungefilterte und ungekühlte Flüssigkeit in die Vorrichtung 1 eintritt, sowie einen reinseitigen Vorrichtungsablauf 15 auf, durch den gefilterte und gekühlte Flüssigkeit aus der Vorrichtung 1 austritt. Ferner besitzt das Filtergehäuse 4 einen Filterauslass 16 und einen Filtereinlass 17. Die Montage des Wärmeübertragers 10 am Filtergehäuse 4 erfolgt nun so, dass der Vorrichtungszulauf 14 mit dem Kühlereinlass 12 fluidisch verbunden ist und dass der Kühlerauslass 13 mit dem Filtereinlass 17 fluidisch verbunden ist. In der Folge kann im Betrieb
der Vorrichtung 1 ungefilterte, ungekühlte Flüssigkeit vom Vorrichtungszulauf 14 über den Kühlereinlass 12 in den Wärmeübertrager 10 einströmen, während ungefilterte, jedoch gekühlte Flüssigkeit am Kühlerauslass 13 durch den Filtereinlass 17 zum Filterelement 5 strömt.

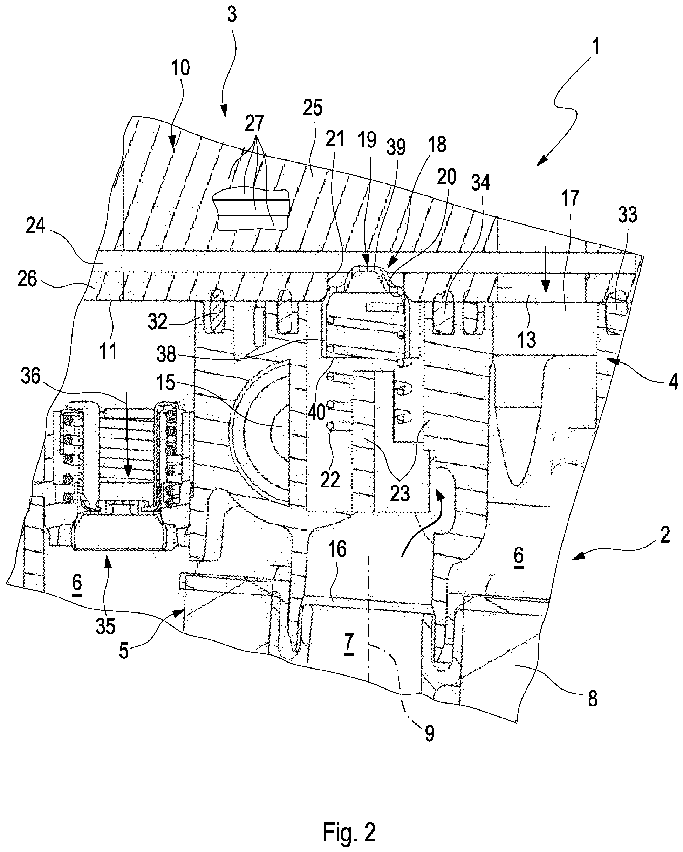

Die Vorrichtung 1 ist außerdem mit einem Filterbypassventil 18 ausgestattet, das in Fig. 2 vergrößert dargestellt ist. Das Filterbypassventil 18 umfasst entsprechend den Fig. 1 und 2 einen verstellbaren Ventilkörper 19, der mit einem Ventilsitz 20 zusammenwirkt, um eine Filterbypassöffnung 21 zu steuern, welche die Rohseite 6 fluidisch mit der Reinseite 7 verbindet. Ferner weist das Filterbypassventil 18 eine Schließdruckfeder 22 auf, die den Ventilkörper 19 in eine Schließstellung antreibt, in welcher der Ventilkörper 19 die Filterbypassöffnung 21 verschließt. Die Schließdruckfeder 22 ist dabei an einem Ventilkäfig 23 abgestützt. Dementsprechend öffnet das Filterbypassventil 18 ab einem vorbestimmten Differenzdruck zwischen Rohseite 6 und Reinseite 7, um die Rohseite 6 unter Umgehung des Filterelements 5 mit der Reinseite 7 fluidisch zu verbinden. Hierdurch kann ein das Filterelement 5 zerstörender Differenzdruck am Filterelement 5 vermieden werden.

Bei der hier vorgestellten Vorrichtung 1 ist der Ventilsitz 20 integral an der Anschlussseite 11 des Wärmeübertragers 10 ausgeformt. Zusätzlich ist hier außerdem der Ventilkäfig 23 integral am Filtergehäuse 4 ausgeformt. Grundsätzlich ist auch eine Ausführungsform denkbar, bei welcher entweder der Ventilsitz 20 separat vom Wärmeübertrager 10 ausgebildet ist oder bei welcher der Ventilkäfig 23 separat vom Filtergehäuse 4 ausgebildet ist. Bevorzugt ist jedoch die hier gezeigte Ausführungsform, bei welcher einerseits der Ventilsitz 20 integral am Wärmeübertrager 10 ausgeformt ist und bei der andererseits der Ventilkäfig 23 integral am Filtergehäuse 4 ausgeformt ist.

Für die Komplettierung des Filterbypassventils 18 werden Schließdruckfeder 22 und Ventilkörper 19 in den Ventilkäfig 23 eingesetzt. Anschließend wird der Wärmeübertrager 10 am Filtergehäuse 4 montiert, wodurch automatisch der Ventilsitz 20 in vorbestimmter Weise positioniert wird, so dass der Ventilkörper 19 in den Ventilsitz 20 eingreifen kann.

Im Wärmeübertrager 10 ist ein Kühlpfad 24 ausgebildet, der den Kühlereinlass 12 mit dem Kühlerauslass 13 fluidisch verbindet. Zweckmäßig befindet sich nun die Filterbypassöffnung 21 zwischen dem Kühlereinlass 12 und dem Kühlerauslass 13, wobei sie am Wärmeübertrager 10 so angeordnet ist, dass sie den Kühlpfad 24 mit der Reinseite 7 fluidisch verbindet. Vorzugsweise besitzt der Wärmeübertrager 10 einen Wärmeübertragungskörper 25 sowie eine Anschlussplatte 26, die auf geeignete Weise miteinander verbunden sind. Die Anschlussplatte 26 bildet die Anschlussseite 11 und enthält dementsprechend den Kühlereinlass 12 und den Kühlerauslass 13 sowie die Filterbypassöffnung 21. Im Bereich dieser Anschlussplatte 26 verläuft dann auch der Kühlpfad 24.

Zweckmäßig handelt es sich beim Wärmeübertrager 10 um einen Plattenwärmetauscher. Bei einem solchen Plattenwärmetauscher ist der Wärmeübertragungskörper 25 durch einen Stapel von einzelnen Plattenelementen 27 gebildet. Im gestapelten Zustand bilden diese Plattenelement 27 einerseits einen in Fig. 1 einen mit Pfeilen angedeuteten Wärmeabgabepfad 28 und einen in Fig. 1 ebenfalls mittels Pfeilen dargestellten Wärmeaufnahmepfad 29 aus. Der Wärmeabgabepfad 28 verbindet den Kühlereinlass 12 mit dem Kühlerauslass 13 fluidisch, führt also die zu kühlende Flüssigkeit. Der Wärmeaufnahmepfad 29 verbindet einen Kühlerzulauf 30 fluidisch mit einem Kühlerablauf 31. Durch den Wärmeaufnahmepfad 29 kann somit ein Kühlmittel eines an den Kühlerzulauf 30 und den Kühlerablauf 31 angeschlossenen Kühlkreises geführt werden. Die beiden Pfade 28, 29 sind mediengetrennt, also fluidisch voneinander entkoppelt, jedoch wärmeübertragend miteinander gekoppelt. Der zuvor genannte Kühlpfad 24 kann dabei einen Bestandteil des Wärmeabgabepfads 28 bilden, der hierzu beispielsweise aus einer Vielzahl parallel durchströmbarer derartiger Kühlpfade 24 bestehen kann, die durch die gestapelte Bauweise des Plattenwärmetauschers übereinander verlaufen. Die Filterbypassöffnung 21 mündet nun in denjenigen Kühlpfad 24 ein, der proximal zum Filtergehäuse 4 verläuft, also den bezüglich des Filtergehäuses 4 nächsten oder zuerst benachbarten Kühlpfad 24 bildet. Dieser erste oder nächste Kühlpfad 24 besitzt den geringsten Durchströmungswiderstand. Ebenso ist es möglich, die Filterbypassöffnung 21 mit mehreren oder mit allen parallelen Kühlpfaden 24 fluidisch zu koppeln, z.B. über eine entsprechende Querverbindung.

Wie den Fig. 1 und 2 entnommen werden kann, können zwischen dem Filtergehäuse 4 und dem Wärmeübertrager 10 mehrere Dichtungen angeordnet sein, nämlich beispielsweise eine Vorlaufdichtung 32, die den Filterauslass 16 und den Kühlereinlass 12 einfasst, eine Rücklaufdichtung 33, die den Kühlerauslass 13 und den Filtereinlass 17 einfasst sowie eine Bypassventildichtung 34, die den Ventilsitz 20 einfasst. Die hier gezeigten Dichtungen 32, 33, 34 wirken jeweils axial, was die Montage des Wärmeübertragers 10 im Filtergehäuse 4 erheblich vereinfacht.

Beim hier gezeigten Beispiel ist im Filtergehäuse 4 außerdem ein Kühlerbypassventil 35 ausgebildet. Es kann einen üblichen Aufbau besitzen und so ausgestaltet sein, dass es ab einem vorbestimmten Differenzdruck zwischen Kühlereinlass 12 und Kühlerauslass 13 einen Kühlerbypass 36 öffnet, der in den Fig. 1 und 2 durch einen Pfeil angedeutet ist und der den Wärmeübertrager 10 umgeht. Stromab des Kühlerbypassventils 35 befindet sich die Flüssigkeit noch immer auf der Rohseite 6, so dass sie das Filterelement 5 durchströmen muss, um zum Vorrichtungsablauf 15 zu gelangen. Zweckmäßig ist das Kühlerbypassventil 35 auf einen kleineren Differenzdruck eingestellt als das Filterbypassventil 18.

Im Beispiel ist gemäß Fig. 1 im Filtergehäuse 4 außerdem ein Rückschlagsperrventil 37 angeordnet, das zwischen dem Vorrichtungszulauf 14 und dem Filterauslass 16 angeordnet ist. Ferner ist es im Filtergehäuse 4 so positioniert, dass es zum Filterauslass 16 hin öffnet, während es zum Vorrichtungszulauf 14 hin sperrt.

Bevorzugt ist die Vorrichtung 1 im Einbauzustand so montiert, dass das Filterelement 5 im Filtergehäuse 4 im Wesentlichen stehend angeordnet ist. Bei stehender Anordnung des Filterelements 5 erstreckt sich dessen Längsmittelachse 9 im Wesentlichen vertikal, wobei auch Neigungen gegenüber einer Vertikalrichtung von bis zu 30° tolerierbar sind. Bei stehendem Filterelement 5 ist das Filterbypassventil 18 zweckmäßig oberhalb des Filterelements 5 angeordnet. Auch befindet sich der Wärmeübertrager 10 hier an der Oberseite des Filtergehäuses 4. Die Anschlussseite 11 des Wärmeübertragers 10 ist somit durch die Unterseite des Wärmeübertragers 10 gebildet.

Gemäß den Fig. 1 und 2 ist das Ventilglied 19 zweckmäßig topfförmig ausgestaltet. Es umfasst einen zylindrischen Wandabschnitt 38 und einen Bodenabschnitt 39. Der Bodenabschnitt 39 verschließt das Ventilglied 19 an der einen Axialseite, während es an der anderen Axialseite offen ist bzw. eine offene Seite 40 besitzt. Durch diese offene Seite 40 ragt die Schließdruckfeder 22 in das Ventilglied 19 hinein. Dabei kann sich die Schließdruckfeder 22 insbesondere am Bodenabschnitt 39 abstützen. Dieser Bodenabschnitt 39 wirkt nun zum Steuern der Filterbypassöffnung 21 mit dem Ventilsitz 20 zusammen.

Gemäß Fig. 1 kann das Filtergehäuse 4 an einer vom Wärmeübertrager 10 abgewandten Seite einen Deckel 41 aufweisen. Mit Hilfe des Deckels 41 kann eine Montageöffnung 42 des Filtergehäuses 4 verschlossen werden, durch welche das Filterelement 5 in das Filtergehäuse 4 einsetzbar ist.

## Patentansprüche

1. Vorrichtung zum Filtern und Kühlen einer Flüssigkeit, insbesondere eines Flüssigkeitskreises, wie zum Beispiel ein Schmierölkreis einer Brennkraftmaschine,
- mit einer Filtereinrichtung (2), die in einem Filtergehäuse (4) zumindest ein Filterelement (5) aufweist, das im Filtergehäuse (4) eine Rohseite (6) von einer Reinseite (7) trennt,
- mit einer Kühleinrichtung (3), die einen Wärmeübertrager (10) mit einer Anschlussseite (11) aufweist, die einen rohseitigen Kühlereinlass (12) für zu kühlende ungefilterte Flüssigkeit und einen rohseitigen Kühlerauslass (13) für gekühlte ungefilterte Flüssigkeit aufweist,
**dadurch gekennzeichnet,**
- **dass** die Vorrichtung (1) ein Filterbypassventil (18) aufweist, das ab einem vorbestimmten Differenzdruck zwischen Rohseite (6) und Reinseite (7) öffnet und die Rohseite (6) unter Umgehung des Filterelements (5) mit der Reinseite (7) fluidisch verbindet,
- **dass** das Filterbypassventil (18) einen verstellbaren Ventilkörper (19) aufweist, der zum Steuern einer die Rohseite (6) fluidisch mit der Reinseite (7) verbindenden Filterbypassöffnung (21) mit einem Ventilsitz (20) zusammenwirkt,
- **dass** das Filterbypassventil (18) eine Schließdruckfeder (22) aufweist, die den Ventilkörper (19) in eine die Filterbypassöffnung (21) verschließende Schließstellung antreibt und die an einem Ventilkäfig (23) abgestützt ist,
- **dass** der Ventilsitz (20) integral an der Anschlussseite (11) des Wärmeübertragers (10) ausgeformt ist und/oder der Ventilkäfig (23) integral am Filtergehäuse (4) ausgeformt ist,
- **dass** im Wärmeübertrager (10) ein Kühlpfad (24) ausgebildet ist, der den rohseitigen Kühlereinlass (12) mit dem rohseitigen Kühlerauslass (13) fluidisch verbindet,
- **dass** die Filterbypassöffnung (21) den Kühlpfad (24) zwischen Kühlereinlass (12) und Kühlerauslass (13) mit der Reinseite (7) fluidisch verbindet.

2. Vorrichtung nach Anspruch 1,
**dadurch gekennzeichnet,**
- **dass** das Filtergehäuse (4) einen rohseitigen Vorrichtungszulauf (14), einen reinseitigen Vorrichtungsablauf (15), einen Filterauslass (16) und einen Filtereinlass (17) aufweist,
- **dass** der Wärmeübertrager (10) mit seiner Anschlussseite (11) so am Filtergehäuse (4) montiert ist, dass der Vorrichtungszulauf (14) mit dem Kühlereinlass (12) fluidisch verbunden ist und dass der Kühlerauslass (13) mit dem Filtereinlass (17) fluidisch verbunden ist.

3. Vorrichtung nach einem Anspruch 1 oder 2,
**dadurch gekennzeichnet,**
**dass** der Wärmeübertrager (10) einen Wärmeübertragungskörper (25) und eine Anschlussplatte (26) aufweist, welche die Anschlussseite (11) aufweist oder bildet.

4. Vorrichtung nach einem der Ansprüche 1 bis 3,
**dadurch gekennzeichnet,**
**dass** der Wärmeübertrager (10) einen Wärmeübertragungskörper (25) aufweist, der durch einen Stapel von Plattenelementen (27) gebildet ist, die im gestapelten Zustand im Wärmeübertragungskörper (25) einen mit dem Kühlereinlass (12) und dem Kühlerauslass (13) fluidisch verbundenen Wärmeabgabepfad (28) und einen mit einem Kühlerzulauf (30) und einem Kühlerablauf (31) fluidisch verbundenen Wärmeaufnahmepfad (29) ausbilden und mediengetrennt sowie wärmeübertragend miteinander koppeln.

5. Vorrichtung nach einem der Ansprüche 1 bis 4,
**dadurch gekennzeichnet,**
**dass** zwischen dem Filtergehäuse (4) und dem Wärmeübertrager (10) eine Vorlaufdichtung (32) angeordnet ist, die axial wirkt und den Filterauslass (16) sowie den Kühlereinlass (12) einfasst.

6. Vorrichtung nach einem der Ansprüche 1 bis 5,
**dadurch gekennzeichnet,**
**dass** zwischen dem Filtergehäuse (4) und dem Wärmeübertrager (10) eine Rücklaufdichtung (33) angeordnet ist, die axial wirkt und den Kühlerauslass (13) sowie den Filtereinlass (17) einfasst.

7. Vorrichtung nach einem der Ansprüche 1 bis 6,
**dadurch gekennzeichnet,**
**dass** zwischen dem Filtergehäuse (4) und dem Wärmeübertrager (10) eine Bypassventildichtung (34) angeordnet ist, die axial wirkt und den Ventilsitz (20) einfasst.

8. Vorrichtung nach einem der Ansprüche 1 bis 7,
**dadurch gekennzeichnet,**
**dass** im Filtergehäuse (4) ein Kühlerbypassventil (35) angeordnet ist, das ab einem vorbestimmten Differenzdruck zwischen Kühlereinlass (12) und Kühlerauslass (13) einen den Wärmeübertrager (10) umgehenden Kühlerbypass (36) öffnet.

9. Vorrichtung nach einem der Ansprüche 1 bis 8,
**dadurch gekennzeichnet,**
**dass** im Filtergehäuse (4) ein Rückschlagsperrventil (37) zwischen dem Vorrichtungszulauf (14) und dem Filterauslass (16) angeordnet ist, das zum Filterauslass (16) öffnet und zum Vorrichtungszulauf (14) sperrt.

10. Vorrichtung nach einem der Ansprüche 1 bis 9,
**dadurch gekennzeichnet,**
**dass** das Filterelement (5) im Filtergehäuse (4) stehend angeordnet ist, wobei das Filterbypassventil (18) oberhalb des Filterelements (5) angeordnet ist.

11. Vorrichtung nach einem der Ansprüche 1 bis 10,
**dadurch gekennzeichnet,**
**dass** das Ventilglied (19) topfförmig ausgestaltet ist, dessen geschlossener Bodenabschnitt (39) außen mit dem Ventilsitz (20) zusammenwirkt und innen an der Schließdruckfeder (22) abgestützt ist, die durch die offene Seite (40) des Ventilglieds (19) in das Ventilglied (19) hineinragt.

12. Vorrichtung nach einem der Ansprüche 1 bis 11,
**dadurch gekennzeichnet,**
**dass** das Filtergehäuse (4) an einer vom Wärmeübertrager (10) abgewandten Seite einen Deckel (41) zum Verschließen einer Montageöffnung (42) aufweist, durch welche das Filterelement (5) in das Filtergehäuse (4) einsetzbar ist.

## Claims

1. Device for filtering and cooling a fluid, in particular of a fluid circuit, such as for example a lubricating oil circuit of an internal combustion engine,
- having a filter device (2) which has in a filter housing (4) at least one filter element (5) which separates in the filter housing (4) a dirty side (6) from a clean side (7),
- having a cooling device (3), which has a heat transfer device (10) with a connection side (11) which has a dirty side cooler inlet (12) for unfiltered fluid to be cooled and a dirty side cooler outlet (13) for cooled unfiltered fluid,
**characterised in**
- **that** the device (1) has a filter bypass valve (18) which from a predetermined pressure difference between dirty side (6) and clean side (7) opens and fluidically connects the dirty side (6), bypassing the filter element (5), with the clean side (7),
- **that** the filter bypass valve (18) has an adjustable valve body (19) which cooperates with a valve seat (20) for controlling a filter bypass opening (21) connecting the dirty side (6) fluidically with the clean side (7),
- **that** the filter bypass valve (18) has a closing compression spring (22) which drives the valve body (19) into a closing position shutting the filter bypass opening (21), and which rests on a valve cage (23),
- **that** the valve seat (20) is integrally formed at the connection side (11) of the heat transfer device (10) and/or the valve cage (23) is integrally formed at the filter housing (4),
- **that** in the heat transfer device (10) is formed a cooling path (24) which fluidically connects the dirty side cooler inlet (12) with the dirty side cooler outlet (13),
- **that** the filter bypass opening (21) fluidically connects the cooling path (24) between cooler inlet (12) and cooler outlet (13) with the clean side (7).

2. Device according to claim 1,
**characterised in**
- **that** the filter housing (4) has a dirty side device feed (14), a clean side device drain (15), a filter outlet (16) and a filter inlet (17),
- **that** the heat transfer device (10) is mounted with its connection side (11) at the filter housing (4) such that the device feed (14) is fluidically connected with the cooler inlet (12) and that the cooler outlet (13) is fluidically connected with the filter inlet (17).

3. Device according to one claim 1 or 2,
**characterised in**
**that** the heat transfer device (10) has a heat transfer body (25) and a connecting plate (26), which has or forms the connection side (11).

4. Device according to one of claims 1 to 3,
**characterised in**
**that** the heat transfer device (10) has a heat transfer body (25) which is formed by a stack of plate elements (27), which in stacked state in the heat transfer body (25) form a heat emitting path (28) which is fluidically connected with the cooler inlet (12) and the cooler outlet (13), and a heat absorbing path (29) which is fluidically connected with a cooler feed (30) and a cooler drain (31), and which couple with one another in a media isolated and heat transferring manner.

5. Device according to one of claims 1 to 4,
**characterised in**
**that** between the filter housing (4) and the heat transfer device (10) is disposed a flow pipe seal (32) which functions axially and encloses the filter outlet (16) and the cooler inlet (12).

6. Device according to one of claims 1 to 5,
**characterised in**
**that** between the filter housing (4) and the heat transfer device (10) is disposed a backflow seal (33) which functions axially and encloses the cooler outlet (13) and the filter inlet (17).

7. Device according to one of claims 1 to 6,
**characterised in**
**that** between the filter housing (4) and the heat transfer device (10) is disposed a bypass valve seal (34) which functions axially and encloses the valve seat (20).

8. Device according to one of claims 1 to 7,
**characterised in**
**that** in the filter housing (4) is disposed a cooler bypass valve (35) which from a predetermined pressure difference between cooler inlet (12) and cooler outlet (13) opens a cooler bypass (36) which bypasses the heat transfer device (10).

9. Device according to one of claims 1 to 8,
**characterised in**
**that** in the filter housing (4) is disposed between the device feed (14) and the filter outlet (16) a blow-back shut-off valve (37) which opens to the filter outlet (16) and shuts-off to the device feed (14).

10. Device according to one of claims 1 to 9,
**characterised in**
**that** the filter element (5) is disposed standing in the filter housing (4), wherein the filter bypass valve (18) is disposed above the filter element (5).

11. Device according to one of claims 1 to 10,
**characterised in**
**that** the valve element (19) is formed in a pot shape, the closed bottom section (39) of which cooperates outside with the valve seat (20) and bears inside on the closing compression spring (22), which protrudes through the open side (40) of the valve member (19) into the valve member (19).

12. Device according to one of claims 1 to 11,
**characterised in**
**that** the filter housing (4) has at one side facing away from the heat transfer device (10) a lid (41) for closing an installation opening (42), through which the filter element (5) can be inserted into the filter housing (4).

## Revendications

1. Dispositif de filtration et de refroidissement d'un liquide, en particulier d'un circuit de liquide, tel qu'un circuit d'huile de lubrification d'un moteur à combustion interne, comportant
- un dispositif formant filtre (2), qui présente dans un boîtier de filtre (4) au moins un élément filtrant (5), qui sépare dans le boîtier de filtre (4) un côté non filtré (6) et un côté filtré (7),
- un dispositif de refroidissement (3), qui présente un échangeur de chaleur (10) ayant un côté de raccordement (11), qui présente une entrée de refroidisseur côté non filtré (12) pour du liquide non filtré destiné à être refroidi et une sortie de refroidisseur côté non filtré (13) pour du liquide non filtré refroidi,
**caractérisé en ce que**
- l'appareil (1) présente une soupape de dérivation de filtre (18), qui s'ouvre à une pression différentielle prédéterminée entre le côté non filtré (6) et le côté filtré (7), et relie par communication fluidique le côté non filtré (6) et le côté filtré (7) en contournant l'élément filtrant (5),
- la soupape de dérivation de filtre (18) comprend un corps de soupape réglable (19) qui coopère avec un siège de soupape (20) pour la commande d'une ouverture de dérivation de filtre (21) reliant par communication fluidique le côté non filtré (6) et le côté filtré (7),
- la soupape de dérivation de filtre (18) présente un ressort de pression de fermeture (22) qui entraîne le corps de soupape (19) dans une position fermée fermant l'ouverture de dérivation de filtre (21) et qui vient en appui sur une cage de soupape (23),
- le siège de soupape (20) est formé d'un seul tenant au niveau du côté de raccordement (11) de l'échangeur de chaleur (10) et/ ou **en ce que** la cage de soupape (23) est formée d'un seul tenant au niveau du boîtier de filtre (4),
- un trajet de refroidissement (24) est formé dans l'échangeur de chaleur (10), qui relie par communication fluidique l'entrée de refroidisseur côté non filtré (12) et la sortie de refroidisseur côté non filtré (13),
- l'ouverture de dérivation de filtre (21) relie par communication fluidique le trajet de refroidissement (24) entre l'entrée de refroidisseur côté non filtré (12) et la sortie de refroidisseur côté non filtré (13) et le côté filtré (7).

2. Dispositif selon la revendication 1,
**caractérisé en ce que**
le boîtier de filtre (4) comporte une entrée de dispositif côté filtré (14), une sortie de dispositif côté filtré (15), une sortie de filtre (16) et une entrée de filtre (17),
l'échangeur de chaleur (10) est monté avec son côté de raccordement (11) au niveau du boîtier de filtre (4), l'entrée de dispositif (14) est reliée par communication fluidique à l'entrée de refroidisseur (12), et la sortie de refroidisseur (13) est reliée par communication fluidique à l'entrée de filtre (17).

3. Dispositif selon la revendication 1 ou 2,
**caractérisé en ce que**
l'échangeur de chaleur (10) comporte un corps d'échange de chaleur (25) et une plaque de connexion (26), qui présente ou forme le côté de raccordement (11).

4. Dispositif selon l'une des revendications 1 à 3,
**caractérisé en ce que**
l'échangeur de chaleur (10) comporte un corps d'échange de chaleur (25), qui est formé d'un empilement d'éléments en plaque (27) qui, dans un état empilé dans le corps d'échange de chaleur (25), présente un trajet de dégagement de chaleur (28) relié par communication fluidique à l'entrée de refroidisseur (12) et à la sortie de refroidisseur (13), et un trajet d'admission de chaleur (29) reliée par communication fluidique à une entrée de refroidisseur (30) et une sortie de refroidisseur (31), dont les milieux sont séparés et qui échangent de la chaleur l'un avec l'autre.

5. Dispositif selon l'une des revendications 1 à 4,
**caractérisé en ce qu'**
un joint d'étanchéité (32) agencé entre le boîtier de filtre (4) et l'échangeur de chaleur (10), qui agit axialement et entoure la sortie de filtre (16) et l'entrée de refroidisseur (12).

6. Dispositif selon l'une des revendications 1 à 5,
**caractérisé en ce qu'**
entre le boîtier de filtre (4) et l'échangeur de chaleur (10) est agencé un joint d'étanchéité (33), qui agit axialement et entoure la sortie de refroidisseur (13) et l'entrée de filtre (17).

7. Dispositif selon l'une des revendications 1 à 6,
**caractérisé en ce qu'**
entre le boîtier de filtre (4) et l'échangeur de chaleur (10) est agencé un joint de soupape de dérivation (34), qui agit axialement et entoure le siège de soupape (20).

8. Dispositif selon l'une des revendications 1 à 7,
**caractérisé en ce qu'**
une soupape de dérivation de refroidisseur (35) est agencée dans le boîtier de filtre (4), qui ouvre une dérivation de refroidisseur (36) contournant l'échangeur de chaleur (10) à une pression différentielle prédéterminée entre l'entrée de refroidisseur (12) et la sortie de refroidisseur (13).

9. Dispositif selon l'une des revendications 1 à 8,
**caractérisé en ce qu'**
un clapet anti-retour (37) est agencé dans le boîtier de filtre (4) entre l'entrée de dispositif (14) et la sortie de filtre (16), qui s'ouvre vers la sortie de filtre (16) et bloque l'entrée de dispositif (14).

10. Dispositif selon l'une des revendications 1 à 9,
**caractérisé en ce que**
l'élément filtrant (5) est agencé verticalement dans le boîtier de filtre (4), de sorte que la soupape de dérivation de filtre (18) est agencée au-dessus de l'élément filtrant (5).

11. Dispositif selon l'une des revendications 1 à 10,
**caractérisé en ce que**
l'obturateur (19) est en forme de pot, dont un tronçon inférieur fermé (39) coopère extérieurement avec le siège de clapet (20) et est supportée intérieurement par le ressort de pression (22), qui fait saillie à travers le côté ouvert (40) de l'obturateur (19) dans l'obturateur (19).

12. Dispositif selon l'une des revendications 1 à 11,
**caractérisé en ce que**
le boîtier de filtre (4) présente, sur un côté opposé à l'échangeur de chaleur (10), un couvercle (41) pour fermer une ouverture de montage (42), à travers laquelle l'élément filtrant (5) peut être inséré dans le boîtier de filtre (4).
